# EUROPÄISCHE PATENTSCHRIFT

(11) **EP 1 866 050 B1**
(45) Veröffentlichungstag und Bekanntmachung des Hinweises auf die Patenterteilung: **17.03.2010**
(21) Anmeldenummer: 06706978.1
(22) Anmeldetag: 16.02.2006
(51) Int. Cl.: B01D 35/14, B01D 35/30

(54) **FILTERVORRICHTUNG**
FILTER DEVICE
DISPOSITIF FILTRANT

(30) Priorität: 24.03.2005 DE 102005013672
(43) Veröffentlichungstag der Anmeldung: 19.12.2007
(73) Patentinhaber: HYDAC FILTERTECHNIK GMBH, 66280 Sulzbach/Saar (DE)
(72) Erfinder: LAUER, Viktor, 66809 Nalbach (DE)
(74) Vertreter: Bartels, Martin Erich Arthur
(86) Internationale Anmeldenummer: PCT/EP2006/001376
(87) Internationale Veröffentlichungsnummer: WO 2006/099922

(56) Entgegenhaltungen:
- DE-A1- 19 644 646
- DE-U- 29 921 543
- DE-U1- 8 810 529
- JP-A- 11 104 410
- US-A- 4 654 140
- US-A- 6 139 738

## Beschreibung

Die Erfindung bezieht sich auf eine Filtervorrichtung, insbesondere einen Bestandteil von Hydroanlagen bildender Leitungsfilter, mit einem Filterelement und einem von einem Filterkopf abnehmbaren Filtergehäuse, das der Aufnahme des Filterelementes dient, das bei der im Filtergehäuse eingenommenen Betriebsposition für den Filtrierbetrieb eine Schmutzseite von einer Reinseite trennt gemäß der Merkmalsausgestaltung des Oberbegriffes des Patentanspruches 1.

Filtervorrichtungen sind dem Grunde nach bekannt, vgl. "Der Hydrauliktrainer, Band 1", 1991, herausgegeben von Mannesmann Rexroth GmbH, Seiten 279 und 280. So können Filtervorrichtungen beispielsweise für einen Betrieb mit sogenannten Spin-On-Patronen ausgelegt sein, wobei eine Filterpatrone, die ein in das Gehäuse fest eingebautes Filterelement enthält, an den Filterkopf anschraubbar ist und wobei nach Ablauf der nutzbaren Betriebszeit des Filterelementes der Austausch desselben in der Weise durchgeführt wird, dass die gesamte Patrone mit dem enthaltenen, verbrauchten Filterelement entsorgt wird. Andererseits sind derartige Filtervorrichtungen auch in der Bauweise betreibbar, bei der ein Filtergehäuse mit in ihm austauschbar aufnehmbarem Filterelement am Filterkopf abnehmbar angebracht ist, so dass bei einem Wechsel des Filterelementes lediglich dieses aus dem Filtergehäuse entfernt und entsorgt wird und das mit einem neuen Filterelement versehene Filtergehäuse weiterhin benutzt wird.

Es ist ersichtlich, dass die letztgenannte Bauweise aufgrund der Weiterverwendung des Filtergehäuses hinsichtlich der Schonung der Ressourcen und der resultierenden Betriebskosten vergleichsweise vorteilhafter ist. Andererseits zeichnet sich die Bauweise, bei der so genannte Spin-On-Patronen zum Einsatz kommen, durch eine besonders hohe Betriebssicherheit aus, weil aufgrund des festen Einbaus des Filterelementes in das Gehäuse der Spin-On-Patrone die Gefahr vermieden ist, dass im Zuge des Auswechselns eines verbrauchten Filterelementes versehentlich ein leeres Filtergehäuse ohne darin eingesetztes frisches Filterelement am Filterkopf angebracht wird. Andererseits kann es bei Filtervorrichtungen mit wieder verwendbarem Filtergehäuse zu schwerwiegenden Beschädigungen oder gar einer Zerstörung der zugehörigen Hydroanlage kommen, falls versehentlich ein Filtergehäuse ohne in ihm befindliches Filterelement am Filterkopf befestigt wird, beispielsweise, indem durch Nachlässigkeit einer Bedienungsperson lediglich ein verbrauchtes Filterelement ausgesondert und das Einsetzen eines frischen Filterelementes unterlassen wird.

Um dem zu begegnen, sind im Stand der Technik schon Lösungen aufgezeigt worden, die einem Benutzer signalisieren sollen, dass kein Filterelement in der Filtervorrichtung eingebaut ist. So zeigt beispielsweise die DE 196 44 646 A1 einen Filter, insbesondere zur Filtrierung des Schmieröls einer Brennkraftmaschine, auf, bestehend aus einem Gehäuse mit einem Rohölzulauf und einem Reinölablauf, einem in dem Gehäuse angeordneten Filterelement sowie einem das Vorrichtungsgehäuse verschließenden und Zugang zu dem Filterelement verschaffenden Deckel. Als Anzeigeeinrichtung dient ein Sicherungselement, welches ein Verschließen des Gehäuses mittels des Deckels bei fehlendem Filterelement verhindert. Das Sicherungselement weist hierfür ein am Gehäuse oder Deckel befestigtes Kippelement auf, welches bei fehlendem Filterelement aufgrund der Schwerkraft oder einer Feder in die Sperrstellung kippt und ein Aufsetzen des Deckels auf das Gehäuse insoweit verhindert.

Durch das DE 88 10 529 U1 ist eine Vorrichtung zum Filtern von Hydraulikmedium bekannt mit einem vom Hydraulikmedium durchströmten, austauschbaren Filterelement, wobei in der Strömungsleitung vor oder nach dem Filterelement für die Unterbrechung der Strömung des Hydraulikmediums bei ausgebautem Filterelement ein Absperrventil vorgesehen ist. Durch die US-A-4,654,140 ist für eine vergleichbare Filtervorrichtung ein Sensor im Gehäusedeckel des das Filterelement aufnehmenden Gehäuses angeordnet, der bei fehlendem Filterelement einer Bedienuhgs- oder Wartungsperson das Fehlen des Elementes anzeigt.

Des weiteren ist durch die US-A-6,139,738 eine gattungsgemäße Filtervorrichtung nebst Filterelement bekannt, bei der das Filterelement in einem Zwischengehäuseabschnitt eines Filtergehäuses aufnehmbar ist, das endseitig von einem kopf- und fußseitigen Abschlußteil mittels Schraubverbindungen verschließbar ist. Das fußseitige Gehäuseteil ist in der Art eines aufschraubbaren Gehäusedeckels ausgebildet, das mit einem Außengewinde auf eine Innengewindestrecke eines bodenseitigen Fortsatzes als Lagerungsteil des Filterelementes aufschraubbar ist. Ferner ist zwischen Gehäusedekkel und dem rohrförmigen Zwischenabschnitt des Filtergehäuses ein Dichtelement eingesetzt, das die genannte Gewindeverbindung gegenüber der Umgebung abdichtet.

Fehlt bei der bekannten Lösung das Filterelement, kann der Gehäusedeckel auch nicht aufgesetzt und in einschraubender Weise am Filterelement festgelegt werden, so dass insoweit eine Anzeigeeinrichtung realisiert ist für die Anzeige des Fehlens des Filterelementes. Das Filterelement weist Führungseinrichtungen auf, die mit zugeordneten Führungsteilen im Filtergehäuse zusammenwirken, um dergestalt in Umfangsrichtung einen drehsicheren Einbau des Filterelementes im Gehäuse zu erreichen. Wird durch einen Montagefehler das Filterelement falsch eingebaut, insbesondere in einer Form, bei der die genannten korrespondierend ausgebildeten Führungsteile nicht miteinander in Eingriff kommen, ist der Gehäusedeckel gleichfalls nicht aufschraubbar und dient auch insoweit als Anzeigeeinrichtung für ein fehlerhaft eingesetztes Filterelement.

Ausgehend von diesem Stand der Technik stellt sich die Erfindung die Aufgabe, eine Filtervorrichtung zu schaffen, bei der gleichfalls, wie im Stand der Technik aufgezeigt, die Gefahr vermieden ist, dass eine der Vorrichtung zugeordnete Hydroanlage betrieben wird, ohne dass sich ein Filterelement im Filtergehäuse befindet, aber mit der Maßgabe, dass eine besonders einfache, kompakte und kostensparende Bauweise erreicht ist.

Erfindungsgemäß ist diese Aufgabe durch eine Filtervorrichtung gelöst, die die Merkmale des Patentanspruches 1 in seiner Gesamtheit aufweist.

Dadurch, dass gemäß dem kennzeichnenden Teil des Patentanspruches 1 der Lagerungsteil des Filterelementes durch einen Fortsatz an einem Ende seines das Filtermaterial tragenden Stützrohres gebildet ist, der in der Betriebsposition im Sitz des Filtergehäuses aufgenommen ist, welcher durch eine rohrstutzenartige Vertiefung im Boden des Filtergehäuses gebildet ist, die die Öffnung konzentrisch umgibt, und dass sich an der Außenseite des Lagerungsteils ein Dichtelement der Verschlußeinrichtung befindet, das mit der Innenwand des die Öffnung umgebenden Sitzes des Filtergehäuses dichtend zusammentwirkt, ergibt sich eine besonders einfache, kompakte und kostensparende Bauweise, indem das mit dem Sitz des Filtergehäuses zusammenwirkende, durch einen Fortsatz des das Filtermaterial tragenden Stützrohres gebildeten Lagerungsteil des Filterelementes auch als Schließkörper der Verschlußeinrichtung und damit als Bestandteil der Anzeigeeinrichtung fungiert.

Insbesondere ist ein gleiches Maß an Betriebssicherheit erreicht, wie dies bei der Bauweise gegeben ist, wo sog. Spin-On-Patronen benutzt werden, bei denen das Filterelement zusammen mit dem es enthaltenden Patronengehäuse ausgewechselt wird. Jedoch sind bei der Erfindung die Nachteile der Werkstoffvergeudung und der erhöhten Betriebskosten, wie sie bei Verwendung von Spin-On-Patronen gegeben sind, vermieden.

Die Anzeigeeinrichtung signalisiert mit Freigabe oder Verschluß der Öffnung am Filtergehäuse das Fehlen oder das Vorhanden sein des Filterelementes im Gehäuse, da bei fehlendem Filterelement aufgrund der freigegebenen Öffnung des Filtergehäuses hierbei ein Austritt von Fluid aus dem Filtergehäuse stattfindet, wenn die Filtervorrichtung ohne eingesetztes Filterelement betrieben wird. Der dahingehende Fehlzustand wird also besonders augenfäll ig angezeigt und verhindert, dass eine zugehörige Hydroanlage fehlerhaft betrieben werden könnte.

Da im Filtrierbetrieb am Filterelement Axialkräfte auftreten können, die in Richtung der Längsachse des Stützrohres wirken, ist es vorteilhaft, den Lagerungsteil, der durch einen axialen Fortsatz des Stützrohres gebildet ist, gegen ein durch Axialkräfte bewirktes Ausheben aus dem Sitz des Filtergehäuses zu sichern. Hierzu kann der Lagerungsteil des Stützrohres eine bei der Betriebsposition mit der Öffnung des Filtergehäuses fluchtende Bohrung mit Innengewinde aufweisen, so dass der Lagerungsteil und damit das Filterelement durch eine die Öffnung des Filtergehäuses durchgreifende Halteschraube im Filtergehäuse axial sicherbar ist.

Diese Bohrung des Lagerungsteiles kann bis ins Innere des Stützrohres, also bis zur Reinseite hin, durchgehend ausgebildet sein, wobei die Verschlußeinrichtung ein weiteres Dichtelement aufweist, das den Rand der Öffnung an der Außenseite des Filtergehäuses gegenüber dem Kopf der Halteschraube abdichtet. Dadurch kann auch bei in der Betriebsposition befindlichem Filterelement bei Bedarf eine Entleerung der Reinseite vorgenommen werden, indem die Halteschraube gelöst und aus der Bohrung herausgenommen wird.

In einer Weiterbildung eines derartigen Ausführungsbeispiels kann der Lagerungsteil zumindest einen eine Verbindung zwischen der durchgehenden Bohrung und der Schmutzseite im Filtergehäuse ermöglichenden Verbindungskanal aufweisen, welcher Kanal durch einen gewindefreien Schaftabschnitt der Halteschraube verschließbar und durch Losdrehen der Halteschraube freigebbar ist. Hierdurch ist auch bei in Betriebsposition befindlichem Filterelement bei Bedarf eine Entleerung sowohl der Reinseite als auch der Schmutzseite möglich.

Wenn bei derartigem Ausführungsbeispiel ein Teilabschnitt der den Lagerungsteil durchziehenden Bohrung eine Erweiterung aufweist, die einen Fluiddurchlaß zwischen dem der Öffnung des Filtergehäuses zugewandten Endbereich und dem Bereich der Bohrung bildet, der durch den gewindefreien Schaftabschnitt der Halteschraube verschließbar ist, braucht zum Zwecke des Entleerens sowohl der Reinseite als auch der Schmutzseite bei in Betriebsposition befindlichem Filterelement die Halteschraube lediglich gelöst, jedoch nicht gänzlich aus der Bohrung herausgenommen zu werden.

Jedoch kann die Anordnung auch so getroffen sein, dass die Halteschraube einen inneren Längskanal aufweist, der an seinem dem Inneren des Filtergehäuses zugewandten Ende offen und an seinem entgegengesetzten Ende in dem Schaftbereich, der sich an das den Kopf der Halteschraube abdichtende Dichtelement anschließt, über einen Querauslaß geöffnet ist. Auch in diesem Falle ist, ohne die Halteschraube gänzlich aus der Bohrung herausnehmen zu müssen, eine Entleerung sowohl der Reinseite als auch der Schmutzseite bei in Betriebsposition befindlichem Filterelement möglich.

Um sicher zu stellen, dass die gelöste Halteschraube unverlierbar am Filtergehäuse verbleibt, kann die Anordnung so getroffen sein, dass der Kopf der Halteschraube an dem vom Schaft abgekehrten Ende einen Antriebsteil mit sich radial erstreckenden Mitnehmerflügeln aufweist, die in einem am Filtergehäuse um die Achse der Schrauben drehbar und axial unverschiebbar gelagerten Drehkäfig in einer Führung geführt sind, die Anschläge für die Drehmomentübertragung auf die Schraube und zumindest einen Anschlag zur Begrenzung der Axialbewegung der Schraube beim Lösen derselben aufweist.

Nachstehend ist die Erfindung anhand von in der Zeichnung dargestellten Ausführungsbeispielen im einzelnen erläutert. Es zeigen:
- Fig. 1 eine abgebrochene, nur einen unteren Teilbereich zeigende perspektivische Darstellung eines ersten Ausführungsbeispieles der erfindungsgemäßen Filtervorrichtung, aufgeschnitten mit in Längsrichtung des Filtergehäuses und zueinander in rechtem Winkel verlaufenden Schnittebenen und
- Fig. 2 bis 4 der Fig. 1 ähnliche Darstellungen jeweils weiterer Ausführungsbeispiele der erfindungsgemäßen Filtervorrichtung.

Ein Filtergehäuse 1, von dem in den Fig. jeweils nur der dem Gehäuseboden 3 benachbarte Bereich dargestellt ist, ist in der bei derartigen Filtervorrichtungen an sich bekannten Weise mit seinem nicht gezeigten, oben offenen Ende mit einem Filterkopf verbindbar, beispielsweise durch Einschrauben. Der Filterkopf weist Anschlußeinrichtungen für Zulauf und Auslauf von zu filtrierendem Fluid auf sowie gegebenenfalls Zusatzeinrichtungen, beispielsweise einen Anschluß für Verschmutzungsanzeige und dergleichen. In dem über einen Großteil seiner Länge kreiszylindrisch geformten Innenraum des Filtergehäuses 1 ist ein als Ganzes mit 5 bezeichnetes Filterelement aufnehmbar, das in den Fig. durchgehend in seiner Betriebsposition dargestellt ist. Das Filterelement 5 weist ein fluiddurchlässiges Stützrohr 7 auf, das von Filtermaterial 9 umgeben ist. Das obere, nicht gezeigte Ende des Stützrohres 7 ist am Filterkopf dicht mit dem Auslauf für das gefilterte Fluid verbunden, während das zu filtrierende Fluid vom Zulauf des Filterkopfes zur Außenseite des Filtermaterials 9 gelangt. Somit bildet das Innere des Stützrohres 7 im Filtrierbetrieb die Reinseite 11, während der das Filtermaterial 9 umgebende Raum innerhalb des Filtergehäuses 1 die Schmutzseite 13 bildet.

Als Sitz, in dem das Filterelement 5 in seiner Betriebsposition innerhalb des Filtergehäuses 1 aufgenommen ist, weist der Boden 3 des Filtergehäuses 1 eine zentral gelegene, rohrstutzenartige Vertiefung 15 auf, deren Innenwand 17 konzentrisch zu einer Öffnung 19 ist, die sich am Grund der Vertiefung 15, zentral gelegen und zur Längsachse des Stützrohres 7 fluchtend, befindet.

Ein am unteren Ende des Stützrohres 7 konzentrisch zu dessen Längsachse vorspringender metallischer Fortsatz des Stützrohres 7 bildet einen kreiszylindrischen Lagerungsteil 21. Dieser ist bei der Betriebsposition des Filterelementes 5 in der den Sitz bildenden Vertiefung 15 aufgenommen, wobei ein an der Außenseite des Lagerungsteiles 21 in einer Ringnut sitzendes Dichtelement 23 den Lagerungsteil 21 gegenüber der Innenwand 17 der Vertiefung 15 und somit gegenüber der am Grund der Vertiefung 15 befindlichen Öffnung 19 abdichtet. Der Lagerungsteil 21 bildet somit eine Verschlußeinrichtung, die bei in Betriebsposition befindlichem Filterelement 5 einen Austritt von Fluid von der Schmutzseite 13 her aus der Öffnung 19 sperrt. Da der Lagerungsteil 21 das untere Ende des Stützrohres 7 fluiddicht verschließt, ist auch kein Austritt von Fluid von der Reinseite 11 her über die Öffnung 19 möglich. Andererseits ist die Öffnung 19 bei nicht vorhandenem Filterelement 5 geöffnet, so dass bei unsachgemäßer Inbetriebnahme mit fehlendem Filterelement 5 dieser unzulässige Betriebszustand durch Austreten von Fluid durch die Öffnung 19 angezeigt wird.

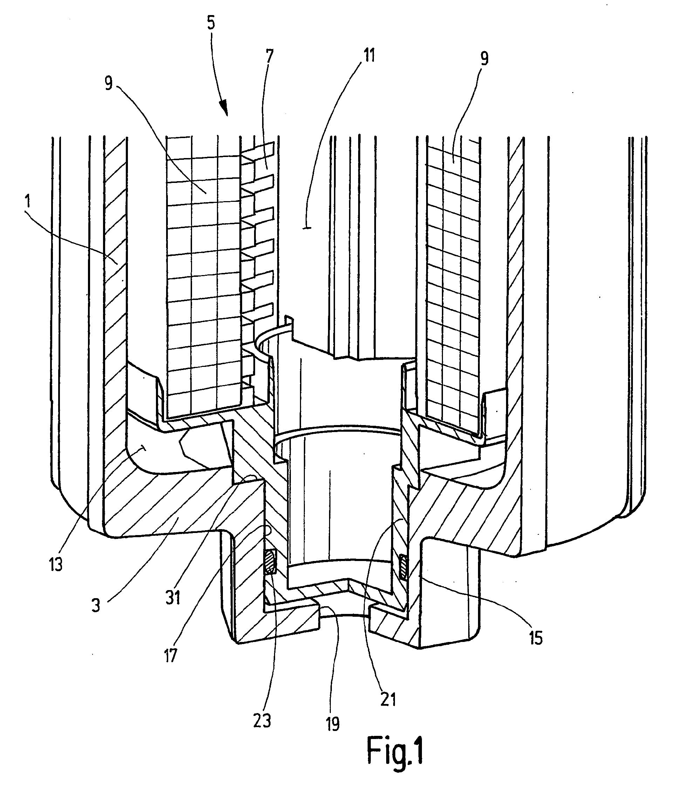

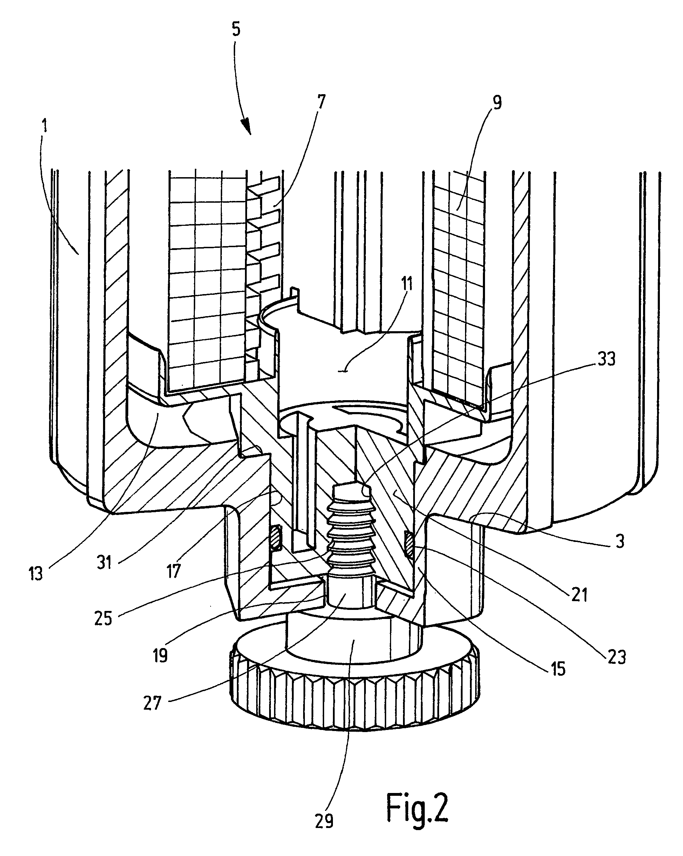

Das Ausführungsbeispiel von Fig. 2 unterscheidet sich gegenüber dem Beispiel von Fig. 1 lediglich insofern, als der Lagerungsteil 21 des Filterelementes 5 nicht zur Gänze als Hohlkörper gestaltet ist, der nur einen dünnwandigen Boden aufweist, sondern dass der Lagerungsteil 21 von Fig. 2 einen inneren massiven Kern enthält, in dem eine Bohrung 33 mit Innengewinde 25 ausgebildet ist, in das eine Halteschraube 27 einschraubbar ist, deren Kopf 29 an der Gehäuseaußenseite anliegt. Mittels der Halteschraube 27 ist der Lagerungsteil 21 und damit das Filterelement 5 in der Betriebsposition gegen Axialkräfte gesichert, die im Filtrierbetrieb am Filterelement 5 auftreten könnten, so dass sichergestellt ist, dass eine am Lagerungsteil 21 radial vorspringende Ringschulter 31 in Anlage an einer zugeordneten Anschlagfläche, die eine radiale Erweiterung an der Innenwand 17 der Vertiefung 15 bildet, gesichert wird.

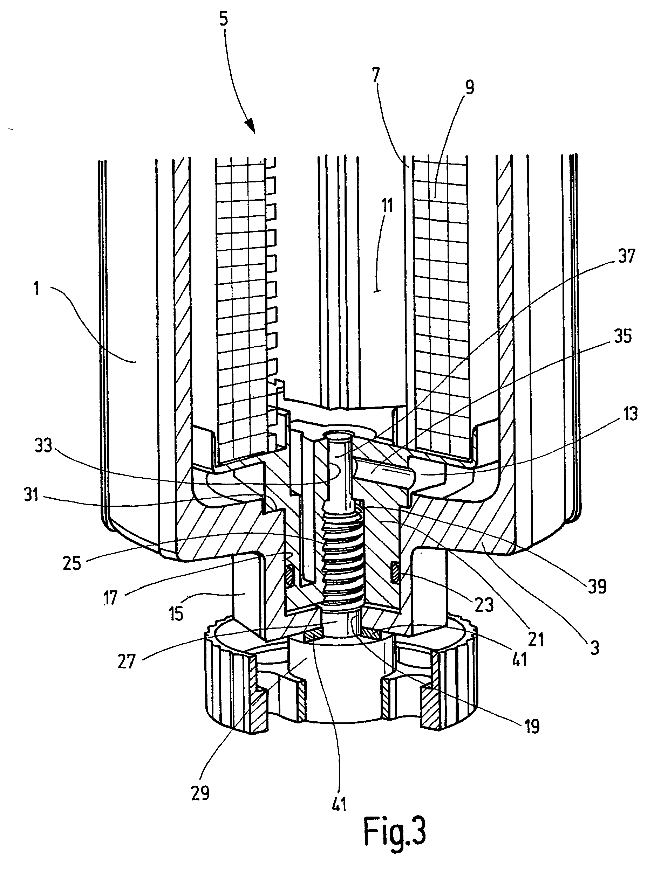

Im Unterschied zu dem Beispiel von Fig. 2 befindet sich im Lagerungsteil 21 des Filterelementes 5 eine durchgehende Bohrung 33, über die bei in Betriebsposition befindlichem Filterelement 5 eine Fluidverbindung zwischen Reinseite 11 im Inneren des Stützrohres 7 und der Öffnung 19 am Grund der Vertiefung 15 hergestellt werden kann. Die Bohrung 33 ermöglicht außerdem über einen Verbindungskanal 35, der im Lagerungsteil 21 quer verlaufend die Bohrung 33 mit der Schmutzseite 13 im Inneren des Filtergehäuses 1 verbindend, dass bei in Betriebsposition befindlichem Filterelement 5 auch eine Entleerung der Schmutzseite 13 erfolgen kann. Wie aus Fig. 3 zu ersehen ist, weist die bei diesem Ausführungsbeispiel vorgesehene Halteschraube 27 einen endseitigen, gewindefreien Schaftabschnitt 37 auf, der bei festgedrehter Halteschraube 27, wie in Fig. 3 dargestellt, das innere Ende des Verbindungskanales 35 verschließt. Wie aus Fig: 3 ebenfalls zu ersehen ist, weist die Bohrung 33 auf einem vom freien Ende des Lagerungsteiles 21 ausgehenden Längenabschnitt eine Bohrungserweiterung 39 in Form einer das Innengewinde 25 nur auf einem geringen Umfangsabschnitt unterbrechenden Nut auf, die eine Fluidverbindung über die Bohrung 33 zur Gehäuseöffnung 19 auch bei nicht völlig aus der Bohrung 33 herausgeschraubter Halteschraube 27 ermöglicht, wenn also noch ein Eingriff mit dem Endbereich des Innengewindes 25 besteht. Somit kann bei in Betriebsposition befindlichem Filterelement 5 bei teilweisem Herausschrauben der Halteschraube 27, wenn die Öffnung 19 nicht mehr durch ein weiteres Dichtelement 41 abgedichtet ist, das bei festgedrehter Halteschraube 27 deren Schraubenkopf 29 gegenüber dem Außenrand der Öffnung 19 abdichtet, eine Entleerung der Reinseite 11 sowie der Schmufzseite 13 erfolgen, sobald die Halteschraube 27 so weit herausgedreht wird, dass ihr gewindefreier Schaftabschnitt 37 in den Bereich der Bohrungserweiterung 39 kommt. Gleichwohl ist ein gänzliches Herausschrauben, d.h. ein Abnehmen der Halteschraube 27 möglich. Wie bei den Beispielen von Fig. 1 und 2 ist bei im Filtergehäuse 1 fehlendem Filterelement 5 kein Verschluß der Gehäuseöffnung 19 gegeben, so dass wiederum ein möglicher Fehlbetrieb durch das Auslaufen von Fluid aus dem Filtergehäuse 1 angezeigt wird.

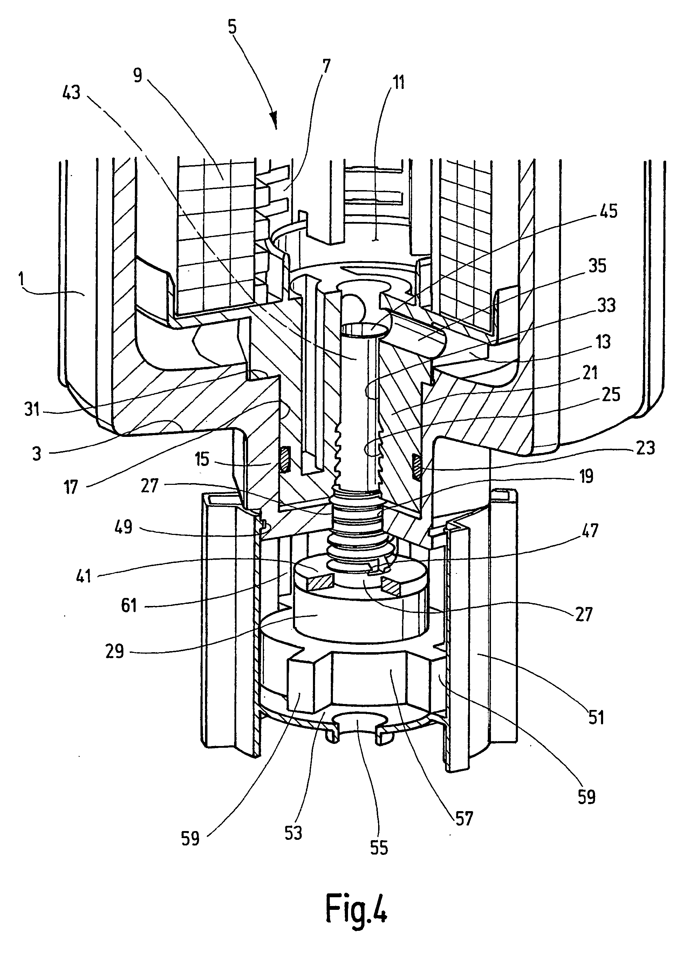

Das Beispiel von Fig. 4 unterscheidet sich von dem Beispiel von Fig. 3 in zweifacher Hinsicht. Die Fig. 4 zeigt das Filterelement 5 in seiner Betriebsposition, jedoch mit teilweise losgedrehter Halteschraube 27. Der erste wesentliche Unterschied gegenüber dem Beispiel von Fig. 3 besteht darin, dass die Halteschraube 27 einen inneren Längskanal 43 aufweist, der sich vom freien Schaftende 45 bis zu einem Querauslaß 47 erstreckt, der sich an einer Stelle des Schaftes der Schraube 27 befindet, die dem Dichtelement 41 benachbart ist, mit dem bei festgedrehter Schraube 27 die Abdichtung zwischen Schraubenkopf 29 und Gehäuseaußenseite an der Öffnung 19 gebildet wird. Bei dem in Fig. 4 gezeigten Betriebszustand mit teilweise gelöster Schraube 27 ist somit, obwohl das Filterelement 5 in der Betriebsposition ist, eine Entleerung sowohl der Reinseite 11 als auch der Schmutzseite 13 über den Verbindungskanal 35, den inneren Kanal 43 der Schraube 27 und deren Querauslaß 47 möglich. Wie bei den übrigen Ausführungsbeispielen ist bei im Filtergehäuse 1 fehlendem Filterelement 5 kein Verschluß der Gehäuseöffnung 19 möglich, so dass ein fehlerhafter Betriebszustand wiederum durch Auslaufen von Fluid angezeigt wird.

Der zweite grundsätzliche Unterschied gegenüber dem Beispiel von Fig. 3 besteht darin, dass die Halteschraube 27 unverlierbar gesichert ist. Zu diesem Zweck befindet sich am unteren Ende der Gehäusevertiefung 15 ein durch Schnappverbindung in einer Ringnut 49 gesicherter Drehkäfig 51 in Form eines kappenartigen Formteiles vorzugsweise aus Kunststoff, das am von der Schnappverbindung abgewandten Ende einen Boden 53 mit einer Auslaßöffnung 55 aufweist. Der Kopf 29 der Halteschraube 27 weist endseitig einen Antriebsteil 57 mit radial vorstehenden Mitnehmerflügeln 59 auf, die in innere Führungen 61 des Käfigs 51 eingreifen und darin axial verschiebbar, jedoch unverdrehbar geführt sind. Der Boden 53 des Käfigs bildet einen Anschlag, der die Axialbewegung der Halteschraube 27 beim Herausschrauben in der Weise begrenzt, dass die Schraube 27 nur soweit herausgeschraubt werden kann, dass der Gewindeeingriff mit dem Innengewinde 25 der Bohrung 33 aufgehoben ist, so dass das Filterelement 5 aus dem Filtergehäuse 1 herausgenommen werden und ein frisches Füterelement 5 in die Betriebsposition eingesetzt werden kann. Wie in Fig. 4 gezeigt, kann bei in Betriebsposition befindlichem Filterelement 5 sowohl eine Entleerung der Reinseite 11 als auch der Schmutzseite 13 über die teilweise herausgeschraubte Schraube 27 erfolgen, wobei jedoch die Schraube 27 durch den Drehkäfig 51 unverlierbar am Gehäuse gehalten wird.

Wie bei dem vorausgehenden Beispielen ist ein fluiddichter Verschluß der Gehäuseöffnung 19 nur bei in Betriebsposition befindlichem Filterelement 5 möglich, so dass ein fehlerhafter Betrieb wiederum durch Auslaufen von Fluid angezeigt wird.

## Patentansprüche

1. Filtervorrichtung, insbesondere einen Bestandteil von Hydroanlagen bildender Leitungsfilter, mit einem Filterelement und einem von einem Filterkopf abnehmbaren Filtergehäuse (1), das der Aufnahme des Filterelementes (5) dient, das bei der im Filtergehäuse (1) eingenommenen Betriebsposition für den Filtrierbetrieb eine Schmutzseite (13) von einer Reinseite (11) trennt, wobei eine das Fehlen oder das Vorhandensein des im Filtergehäuse (1) in Betriebsposition befindlichen Filterelementes (5) signalisierende Anzeigeeinrichtung (19, 21) vorhanden ist, wobei die Anzeigeeinrichtung in der Wand (15) des Filtergehäuses (1) eine Öffnung (19) sowie eine Verschlußeinrichtung (21) aufweist, die in Abhängigkeit vom Fehlen oder Vorhandensein eines in der Betriebsposition befindlichen Filterelementes (5) in einen die Öffnung (19) freigebenden Offenzustand oder einen die Öffnung (19) verschließenden Sperrzustand bringbar ist, wobei Freigabe oder Verschluß der Öffnung (19) das Fehlen oder das Vorhandensein eines in Betriebsposition befindlichen Filterelementes (5) signalisiert, wobei die Verschlußeinrichtung zumindest einen Schließkörper mit zumindest einem Dichtelement (23) aufweist, das bei der Betriebsposition des Filterelementes (5) eine Abdichtung zwischen Schließkörper und Öffnung (19) bildet, und wobei der Schließkörper durch einen Lagerungsteil (21) des Filterelementes (5) gebildet ist, welcher Lagerungsteil (21) bei der Betriebsposition in einem Sitz (15) des Filtergehäuses (1) aufgenommen ist, **dadurch gekennzeichnet, dass** der Lagerungsteil (21) des Filterelementes (5) durch einen Fortsatz an einem Ende seines das Filtermaterial (9) tragenden Stützrohres (7) gebildet ist, der in der Betriebsposition im Sitz (15) des Filtergehäuses (1) aufgenommen ist, welcher durch eine rohrstutzenartige Vertiefung (15) im Boden (3) des Filtergehäuses (1) gebildet ist, die die Öffnung (19) konzentrisch umgibt, und dass sich an der Außenseite des Lagerungsteiles (21) ein Dichtelement (23) der Verschlußeinrichtung befindet, das mit der Innenwand (17) des die Öffnung (19) umgebenden Sitzes (15) des Filtergehäuses (1) dichtend zusammenwirkt.

2. Filtervorrichtung nach Anspruch 1, **dadurch gekennzeichnet, dass** der Lagerungsteil (21) des Stützrohres (7) eine bei der Betriebsposition mit der Öffnung (19) des Filtergehäuses (1) fluchtende Bohrung (33) mit Innengewinde aufweist und dass der Lagerungsteil (21) und damit das Filterelement (5) durch eine die Öffnung (19) des Filtergehäuses (1) durchgreifende Halteschraube (27) im Filtergehäuse (1) axial sicherbar ist.

3. Filtervorrichtung nach Anspruch 2, **dadurch gekennzeichnet, dass** die Bohrung (33) des Lagerungsteiles (21) bis ins Innere des Stützrohres (7) durchgehend ausgebildet ist und dass die Verschlußeinrichtung ein weiteres Dichtelement (41) aufweist, das den Rand der Öffnung (19) an der Außenseite des Filtergehäuses (1) gegenüber dem Kopf (29) der Halteschraube (27) abdichtet.

4. Filtervorrichtung nach Anspruch 3, **dadurch gekennzeichnet, dass** der Lagerungsteil (21) zumindest einen eine Verbindung zwischen der durchgehenden Bohrung (33) und der Schmutzseite (13) im Filtergehäuse (1) ermöglichenden Verbindungskanal (35) aufweist, welcher Kanal durch einen gewindefreien Schaftabschnitt (37) der Halteschraube (27) verschließbar und durch Losdrehen der Halteschraube (27) freigebbar ist.

5. Filtervorrichtung nach Anspruch 4, **dadurch gekennzeichnet, dass** ein Teilabschnitt der den Lagerungsteil (21) durchziehenden Bohrung (33) eine Erweiterung (39) aufweist, die einen Fluiddurchlaß zwischen dem der Öffnung (19) des Filtergehäuses (1) zugewandten Endbereich und dem Bereich der Bohrung (33) bildet, der durch den gewindefreien Schaftabschnitt (37) der Halteschraube (27) verschließbar ist.

6. Filtervorrichtung nach Anspruch 5, **dadurch gekennzeichnet, dass** die Halteschraube (27) einen inneren Längskanal (43) aufweist, der an seinem dem inneren des Filtergehäuses (1) zugewandten Ende offen und an seinem entgegengesetzten Ende in dem Schaftbereich, der sich an das den Kopf (29) der Halteschraube (27) abdichtende Dichtelement (41) anschließt, über einen Querauslaß (47) geöffnet ist.

7. Filtervorrichtung nach einem der Ansprüche 2 bis 6, **dadurch gekennzeichnet, dass** der Kopf (29) der Halteschraube (27) an dem vom Schaft abgekehrten Ende einen Antriebsteil (57) mit sich radial erstreckenden Mitnehmerflügeln (59) aufweist, die in einem am Filtergehäuse (1) um die Achse der Schraube (27) drehbar und axial unverschiebbar gelagerten Drehkäfig (51) in einer Führung (61) geführt sind, die Anschläge für die Drehmomentübertragung auf die Schraube (27) und zumindest einen Anschlag (53) zur Begrenzung der Axialbewegung der Schraube (27) beim Lösen derselben aufweist.

## Claims

1. A filter device, in particular a line filter forming a component of hydraulic installations, having a filter element and a filter housing (1) that can be removed from a filter head, and which serves to accommodate the filter element (5) which, in the operating position adopted in the filter housing (1) for the filtering operation, separates a contaminated side (13) from a clean side (11), a display device (19, 21) indicating the lack or the presence of the filter element (5) located in the filter housing (1) in the operating position, the display device having in the wall (15) of the filter housing (1) an opening (19) and a closure device (21) which, dependently upon the lack or presence of a filter element (5) located in the operating position can be brought into an open state clearing the opening (19) or a blocking state closing the opening (19), the clearance or the closure of the opening (19) indicating the lack or the presence of a filter element (5) located in the operating position, the closure device having at least one closing body with at least one sealing element (23) which when the filter element (5) is in the operating position forms a seal between the closing body and the opening (19), and the closing body being formed by a mounting part (21) of the filter element (5), said mounting part (21) being accommodated in a seat (15) of the filter housing (1) in the operating position, **characterised in that** the mounting part (21) of the filter element (5) is formed by an extension on one end of its support pipe (7) supporting the filter material (9) and which in the operating position is accommodated in the seat (15) of the filter housing (1) which is formed by a pipe support-like indentation (15) in the base (3) of the filter housing (1) which surrounds the opening (19) concentrically, and that located on the outside of the mounting part (21) is a sealing element (23) of the closure device which interacts, such as to form a seal, with the inner wall (17) the seat (15) of the filter housing (1) surrounding the opening (19).

2. The filter device according to Claim 1, **characterised in that** the mounting part (21) of the support pipe (7) has a hole (33) with an internal thread flush with the opening (19) of the filter housing (1) in the operating position, and that the mounting part (21), and so the filter element (5) can be secured axially within the filter housing (1) by a holding screw (27) passing through the opening (19) of the filter housing (1).

3. The filter device according to Claim 2, **characterised in that** the hole (33) of the mounting part (21) is formed continuously to the inside of the support pipe (7), and that the closure device has a further sealing element (41) which seals the edge of the opening (19) on the outside of the filter housing (1) in relation to the head (29) of the holding screw (27).

4. The filter device according to Claim 3, **characterised in that** the mounting part (21) has at least one connection channel (35) enabling connection between the continuous hole (33) and the contaminated side (13) within the filter housing (1), it being possible to close said channel by means of a thread-free shaft section (37) of the holding screw (27) and to clear said channel by unscrewing the holding screw (27).

5. The filter device according to Claim 4, **characterised in that** a partial section of the hole (33) passing through the mounting part (21) has an extension (39) which forms a fluid passage between the end region facing towards the opening (19) of the filter housing (1) and the region of the hole (33) which can be closed by the thread-free shaft section (37) of the holding screw (27).

6. The filter device according to Claim 5, **characterised in that** the holding screw (27) has an inner longitudinal channel (43) which is open on its end facing towards the inside of the filter housing (1) and is opened by means of a lateral outlet (47) on its opposing end in the shaft region which adjoins the sealing element (41) sealing the head (29) of the holding screw (27).

7. The filter device according to any of Claims 2 to 6, **characterised in that** on the end turned away from the shaft the head (29) of the holding screw (27) has a drive part (57) with radially extending carrier wings (59) which are guided in a turning cage (51) mounted on the filter housing such as to rotate about the axis of the screw (27) and with no axial movement, in a guide which has stops for the transfer of torque onto the screw (27), and at least one stop (53) for limiting the axial movement of the screw (27) upon unscrewing the latter.

## Revendications

1. Dispositif filtrant, notamment filtre de conduite, formant une partie constitutive d'installations hydrauliques comprenant un élément filtrant et une enveloppe (1) de filtre pouvant être retirée d'une tête de filtre et servant à la réception de l'élément (5) filtrant qui, en la position de fonctionnement prise dans l'enveloppe (1) de filtre, sépare pour le fonctionnement de filtration un côté (13) sale d'un côté (11) propre, dans lequel un dispositif (19,21) d'indication, signalant l'absence ou la présence de l'élément (5) filtrant se trouvant en position de fonctionnement dans l'enveloppe (1) du filtre, est présent, le dispositif d'indication ayant dans la paroi (15) de l'enveloppe (1) du filtre une ouverture (19) ainsi qu'un dispositif (21) de fermeture qui, en fonction de l'absence ou de la présence d'un élément (5) filtrant se trouvant en la position de fonctionnement, peut être mis dans un état d'ouverture dégageant l'ouverture (19) ou dans un état d'obturation fermant l'ouverture (19), le dégagement ou l'obturation de l'ouverture (19) signalant l'absence ou la présence d'un élément (5) filtrant se trouvant en position de fonctionnement, le dispositif de fermeture ayant au moins un obturateur ayant au moins un élément (23) d'étanchéité qui, pour la position de fonctionnement de l'élément (5) filtrant, forme une étanchéité entre l'obturateur et l'ouverture (19), et dans lequel l'obturateur est formé par une partie (21) de montage de l'élément (5) filtrant, laquelle partie (21) de montage est reçue dans la position de fonctionnement dans un siège (15) de l'enveloppe (1) du filtre, **caractérisé en ce que** la partie (21) de montage de l'élément (5) filtrant est formée par un prolongement à une extrémité de son tube (7) support portant la matière (9) filtrante, tube qui en la position de fonctionnement, est reçu dans le siège (15) de l'enveloppe (1) du filtre, lequel est formé par une cavité (15) de type tubulaire dans le fond (3) de l'enveloppe (1) du filtre, cavité qui entoure concentriquement l'ouverture (19), et **en ce que** sur le côté extérieur de la partie (21) de montage se trouve un élément (23) d'étanchéité du dispositif de fermeture, qui coopère d'une manière étanche avec la paroi (17) intérieure du siège (15), entourant l'ouverture (19), de l'enveloppe (1) du filtre.

2. Dispositif filtrant suivant la revendication 1, **caractérisé en ce que** la partie (21) de montage du tube (7) d'appui a un taraudage (33) aligné en la position de fonctionnement, avec l'ouverture (19) de l'enveloppe (1) du filtre et **en ce que** la partie (21) de montage et ainsi l'élément (5) filtrant est empêché de se déplacer axialement par une vis (27) de maintien dans l'enveloppe (1) du filtre passant dans l'ouverture (19) de l'enveloppe (1) du filtre.

3. Dispositif filtrant suivant la revendication 2, **caractérisé en ce que** le taraudage (33) de la partie (21) de montage va d'une manière continue jusqu'à l'intérieur du tube (7) d'appui et **en ce que** le dispositif de fermeture a un autre élément (41) d'étanchéité qui rend étanche le bord de l'ouverture (19) sur le côté extérieur de l'enveloppe (1) du filtre par rapport à la tête (29) de la vis (27) de maintien.

4. Dispositif filtrant suivant la revendication 3, **caractérisé en que** la partie (21) de montage a au moins un canal (35) de communication permettant une communication entre le trou (33) traversant et le côté (13) sale dans l'enveloppe (1) du filtre, lequel canal peut être fermé par un tronçon (37) de fût sans filetage de la vis (27) de maintien et peut être dégagé en dévissant la vis (27) de maintien.

5. Dispositif filtrant suivant la revendication 4, **caractérisé en ce qu'**une section partielle du trou (33) traversant la partie (21) de montage a un élargissement (39) qui forme un passage pour du fluide entre la partie de l'extrémité tournée vers l'ouverture (19) de l'enveloppe (1) du filtre et la partie du trou (33), passage qui peut être fermé par le tronçon (37) du fût sans filetage de la vis (27) de maintien.

6. Dispositif filtrant suivant la revendication 5, **caractérisé en ce que** la vis (27) de maintien a un canal (43) longitudinal intérieur qui est ouvert à son extrémité tournée vers l'intérieur de l'enveloppe (1) de filtre et est ouvert, par une sortie (47) transversale, à son extrémité opposée dans la partie du fût, qui se raccorde à l'élément (41) d'étanchéité rendant étanche la tête (29) de la vis (27) de maintien.

7. Dispositif filtrant suivant l'une des revendications 2 à 6, **caractérisé en ce que** la tête (29) de la vis (27) de maintien a, à l'extrémité éloignée du fût, une partie (57) d'entraînement ayant des ailettes (59) d'entraîneur s'étendant radialement, qui sont guidées dans un guidage (61) dans une cage (51) tournante pouvant tourner autour de l'axe de la vis (27) et montée sans pouvoir coulisser axialement, guidage qui a des butées pour la transmission du couple de rotation à la vis (27) et au moins une butée (53) de limitation du déplacement axial de la vis (27) lorsque celle-ci est desserrée.
